# EUROPEAN PATENT APPLICATION

(11) **EP 2 082 950 A1**
(43) Date of publication of application: **29.07.2009**
(21) Application number: 09001011.7
(22) Date of filing: 26.01.2009
(51) Int. Cl.: B62H 5/08, B62H 5/20, B62H 5/10

(54) **Bicycle lock, bicycle provided with a bicycle lock and security system for use in a bicycle**

(30) Priority: 24.01.2008 NL 1034947; 25.01.2008 NL 1034949; 25.01.2008 NL 1034950
(71) Applicant: Spanninga Metaal B.V., 8501 MK Joure (NL); Holland Produkt Design BV, 1811 ET Alkmaar (NL)
(72) Inventor: Schoonemeijer, Johannes, 1811 ET Alkmaar (NL)
(74) Representative: Dorna, Peter

(57) **Abstract**

The present invention relates to a bicycle lock for locking the rotation of the crank axle of a bicycle. The bicycle lock comprises a housing (4) for the lock, which can be accommodated in the saddle tube (3), near the crank axle (2). The lock is provided with a locking pin (5) that can move forward and backward, one end of which can be received in a recess (7) formed in the crank axle (2) or in a part surrounding said crank axle (2) in a locking position of the locking pin (5), in which locking position the crank axle (2) is locked against rotation and the bicycle is locked. The other end of the locking pin (5) is connected, via a spring (13), to a drive unit (10) for moving the locking pin (5) into and out of the locking position. A sleeve (8) which is movable between two end positions is accommodated in the housing (4), which sleeve (8) is connected to the drive unit (10) at one end and which is provided with a passage (12) at the other end, within which passage (12) the locking pin (5) can move forward and backward, whilst the spring (13) is accommodated in the sleeve (8), being supported on the inside of the sleeve (8) on the one hand and on the locking pin (5) on the other hand.

## Description

The present invention relates to a bicycle lock for locking the rotation of the crank axle of a bicycle, comprising a housing for the lock, which can be accommodated in the saddle tube, near the crank axle, which lock is provided with a locking pin that can move forward and backward, one end of which can be received in a recess formed in the crank axle or in a part surrounding said crank axle in a locking position of the locking pin, in which locking position the crank axle is locked against rotation and the bicycle is locked, whilst the other end of the locking pin is connected, via a spring, to a drive unit for moving the locking pin into and out of the locking position.

Such a bicycle lock is known. The known bicycle lock has the drawback that the path of movement of the locking pin and the spring relative to the housing and the crank axle is difficult to control. The object of the invention is to obviate this drawback of the known bicycle lock. In order to accomplish that object, the bicycle lock according to the invention is characterised in that a sleeve which is movable between two end positions is accommodated in the housing, which sleeve is connected to the drive unit at one end and which is provided with a passage at the other end, within which passage the locking pin can move forward and backward, whilst the spring is accommodated in the sleeve, being supported on the inside of the sleeve on the one hand and on the locking pin on the other hand.

According to a preferred embodiment of the bicycle lock according to the invention, the connection of the sleeve to the drive unit is formed by an internally threaded opening formed in the sleeve, through which a screw shaft connected to the drive unit is passed.

According to another preferred embodiment of the bicycle lock according to the invention, the drive unit is formed by an electric motor.

According to another preferred embodiment of the bicycle lock according to the invention, the electric motor is deactivated on receipt of a signal from one or more switches operated by the sleeve when the sleeve reaches an end position in the housing.

According to yet another preferred embodiment of the bicycle lock according to the invention, the switches are disposed on either side of the sleeve in the housing.

The invention further relates to a bicycle fitted with a bicycle lock according to the invention.

Preferably, the pedals of the bicycle are mounted in such manner relative to the recess in the crank axle that the locking pin can only be moved into the locking position when the pedals of the bicycle take up an at least substantially vertical position. An important advantage of this preferred embodiment is the fact that it is at least not so easily possible to exert a considerable force on the bicycle lock, which might cause the bicycle lock to fail, in comparison with the situation in which the pedals form a more or less horizontal line in the locking position of the locking pin. Since the locking pin of the bicycle according to the present preferred embodiment can only be put in the locking position when one of the pedals is in the uppermost position and the other pedal is in the lowermost position, it is hardly possible for a person to exert a major force on or against the pedals. The effect that is achieved in this way is that the bicycle fitted with the bicycle lock is highly secured against damage and/or breaking of the crank axle when the crank axle is locked against rotation by the locking pin of the lock.

The crank axle, or a part surrounding said crank axle, is preferably provided with only one, maximally two recesses for the locking pin.

The above-described preferred embodiments of a bicycle according to the present invention are also quite suitable for use in combination with bicycle locks according to the prior art. In such a situation, a bicycle fitted with a bicycle lock comprises a housing for the lock accommodated in the saddle tube, near the crank axle, which lock is provided with a locking pin that can move forward and backward, one end of which can be received in a recess formed in the crank axle, or in a part surrounding said crank axle, in a locking position of the locking pin, in which locking position the crank axle is locked against rotation and the bicycle is locked, whilst the pedals of the bicycle are mounted in such a manner relative to the recess in the crank axle that the locking pin can only be moved into the locking position when the pedals of the bicycle take up an at least substantially vertical position.

According to another preferred embodiment, the bicycle according to the invention is provided with a security system against unauthorized removal of a housing of the bicycle lock that is accommodated in the saddle tube of the bicycle, near the crank axle, which housing is provided with a connecting means adapted to mate with a connecting element mounted in the saddle tube or forming part thereof for forming a detachable connection, for example a rotary connection, such as a threaded connection, of the housing in the saddle tube, said system comprising a housing tube part provided at the upper side of the housing, in whose wall at least one further recess is provided, which recess terminates in the upper edge of the housing tube part with a first end thereof, said system further comprising a tool that can be placed in the saddle tube, which tool is provided with at least one projection, the shapes of said further recess and said projection being adapted to conform to one another, such that the tool provided with the projection can be inserted into said further recess and is capable of transmitting a movement to the housing tube part for fixing the connection of the housing in the saddle tube, or for releasing the connection and removing the housing from the saddle tube. The use of such a security system renders it impossible, or at least makes it difficult to release the locking engagement of the crank axle by removing the saddle from the saddle tube and subsequently removing the lock from the saddle tube, after which stealing the bicycle is a simple job.

According to a preferred embodiment, a portion of said further recess terminates in a corner, and the projection has a portion that can hook into said corner.

According to another preferred embodiment, several further recesses distributed over the circular circumference of the housing tube part are provided, which further recesses, according to a further aspect of the system according to the invention, have mutually different shapes.

According to another preferred embodiment, the tool is provided with several projections, the spacing and shapes of which projections correspond to the spacing and shapes of the further recesses in the housing tube part, such that each projection fits only one of said further recesses in the housing tube part.

According to yet another preferred embodiment, the tool is provided with a tool tube part, whose wall thickness and diameter are basically the same as those of the housing tube part, and whose projection or projections are formed of the material of the tool tube part.

According to yet another preferred embodiment, the housing tube part is provided with an inner tube part that is rotatably accommodated therein, the external diameter of which inner tube part being only slightly smaller than the internal diameter of the housing tube part, such that the inner tube part is a more or less tight fit in the housing tube part.

According to another preferred embodiment, said further recess widens towards the upper edge and/or the wall thickness of a projection is substantially the same as that of the housing part.

If a number of projections are provided, said projections are preferably distributed over the circular circumference of the tool tube part.

It is furthermore preferable if the upper edge of the housing part is inclined and has a sharp edge, and/or if the upper edge of the housing part is pointed.

It is also preferable if a resilient material is provided between the outer side of the housing of the bicycle lock and the inner side of the saddle tube, which resilient material is preferably in the form of a ring provided round the housing and/or consists of a foam.

If an inner tube part is used, it is furthermore preferable if the upper edge of the inner tube part is disposed at substantially the same height as the upper edge of the housing tube part outside the region of said further recesses.

The invention further provides a security system for use in a bicycle according to the invention as discussed in the foregoing. Such security systems are also quite suitable for use in bicycles fitted with bicycle locks according to the prior art, which lock the crankshaft. In that case a security system is provided against unauthorised removal of a housing of the bicycle lock that is accommodated in a saddle tube of a bicycle, near the crank axle, which housing is provided with a connecting means adapted to mate with a connecting element mounted in the saddle tube or forming part thereof for forming a detachable connection, for example a rotary connection, such as a threaded connection, of the housing in the saddle tube, which system comprises a housing tube part provided at the upper side of the housing, in whose wall at least one further recess is provided, which recess terminates in the upper edge of the housing tube part with a first end thereof, and which system further comprises a tool to be placed in the saddle tube, which tool is provided with at least one projection, the shapes of said further recess and said projection being adapted to conform to each other, such that the tool provided with the projection can be inserted into said further recess and is capable of transmitting a movement to the housing tube part for securing the connection of the housing in the saddle tube, or for releasing the connection and removing the housing from the saddle tube.

Further aspects and details will be described with reference to the drawings of preferred embodiments of the bicycle, the bicycle lock and the security system according to the invention, which must by no means be taken to be limitative to the invention, however.
Figure 1 is a sectional side view of part of a bicycle frame fitted with a bicycle lock.
Figures 2a and 2b are sectional side views of an embodiment of the bicycle lock of figure 1.
Figures 3a, 3b and 3c are partial sectional side views of an embodiment of the bicycle lock of figure 1.
Figure 4 is a sectional view corresponding to figure 1, in which different reference numerals are used.
Figure 5 is a perspective view of an embodiment of the housing of the bicycle lock.
Figures 6a and 6b show a housing tube part, in which a tool of the security system according to the invention is placed.
Figures 6c shows the housing tube part and the tool of figures 6a and 6b, in which the tool has been removed from the housing tube part, and in which the housing tube part is shown to accommodate the inner tube part.
Figure 6d is an exploded view of the tool, the housing part and the inner tube part.

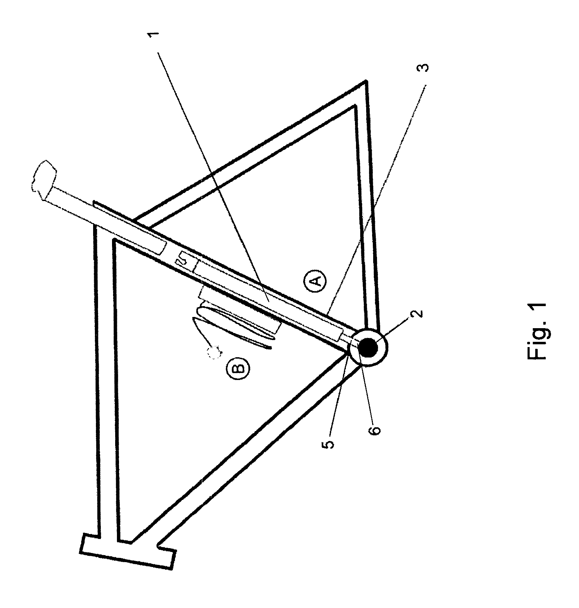

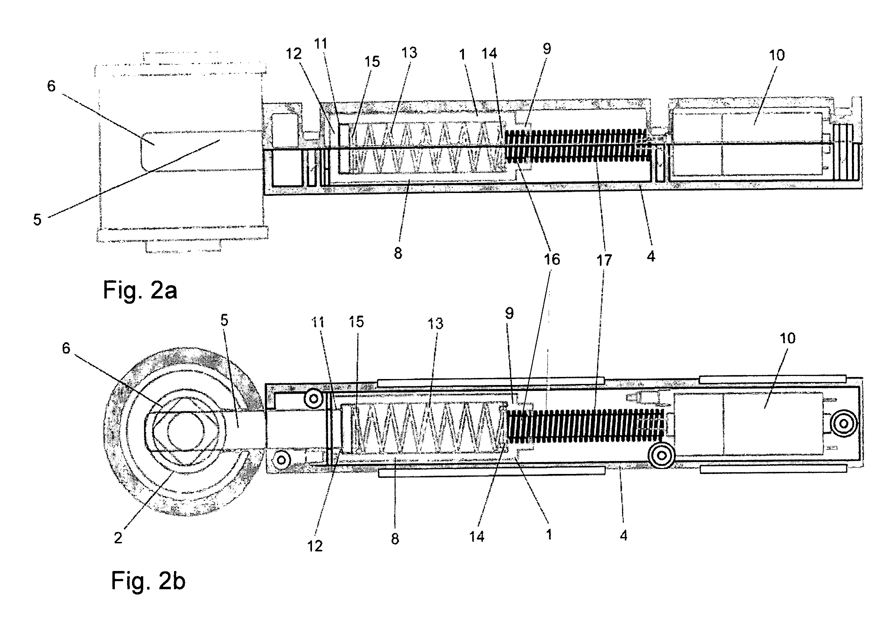

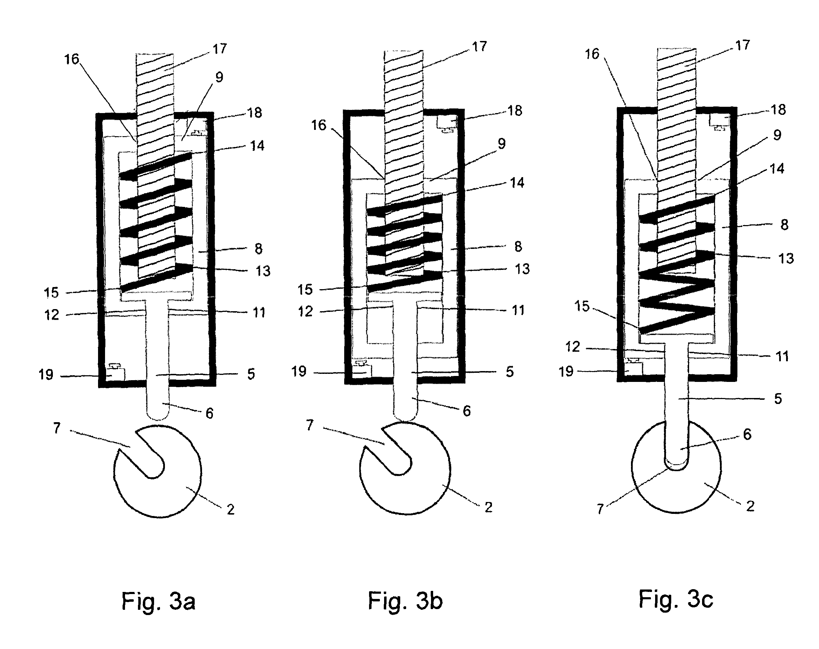

As figures 1 and 2 show, the bicycle lock 1 for locking the crank axle 2 of a bicycle against rotation comprises a housing 4 for the lock to be accommodated in the saddle tube 3, near the crank axle 2, which lock is provided with a locking pin 5 that can move forward and backward, one end 6 of which can be received in a single recess 7 formed in the crank axle 2 (see figures 3), and by means of which the crank axle 2 is locked against rotation and the bicycle is locked. Accommodated in the housing 4 is a sleeve 8, which sleeve can move forward and backward between two end positions and which is connected to the drive unit, an electric motor 10 in this embodiment, at one end 9 and which is provided with a passage 12 at the other end 11, within which passage the locking pin 5 can move forward and backward. The sleeve 8 further houses a spring 13, which is on the one hand supported on the inner side of the sleeve 8 with one end and which is on the other hand supported on the locking pin 5 with the other end. In figure 3a, the sleeve 8 is shown in the free end position thereof. In figure 3c it is shown in the locking end position, which figure shows that the sleeve 8 has been moved towards the crank axle 2 within the housing 4 and that the locking pin 5 extends into the recess 7 of the crank axle 2 with its end 6. The pedals (not shown) of the bicycle are preferably mounted in such a manner relative to the recess 7 in the crank axle 2 that the locking pin 5 can only be put in the locking end position when the pedals take up a substantially vertical position.

At its end 9, the sleeve 8 is provided with an internally threaded opening 16, through which a screw shaft 17 connected to the electric motor 10 is passed.

Rotation of the screw shaft 17 causes the sleeve 8 to move in the direction of the crank axle 2 so as to take up the locking position, whilst counter-rotation of the school shaft 17 causes the sleeve 8 to move in the direction away from the crank axle 2.

Two pressure switches 18 and 19 are furthermore provided in the housing on either side of the sleeve, which pressure switches are operated by the sleeve 8 when the sleeve 8 reaches an end position in the housing 4, with the motor 10 being controlled by the signal received from said switches.

The bicycle lock is provided with a remote control unit, by means of which the electric motor 10 can be operated.

Figure 3b shows how the locking pin 5 pushes against the crank axle 2 under the influence of the pressure from the spring 13 when the recess 7 in the crank axle 2 is not correctly positioned relative to the locking pin 5. When a correct position of the recess 7 relative to the locking pin 5 is reached, the locking pin 5 can snap into the recess 7 yet under the influence of the pressure of the spring 13.

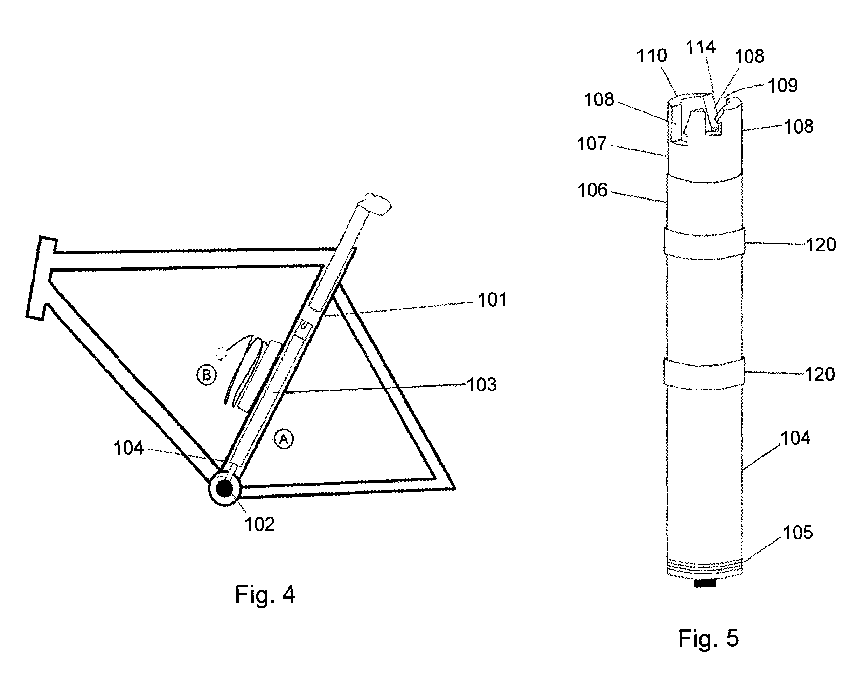

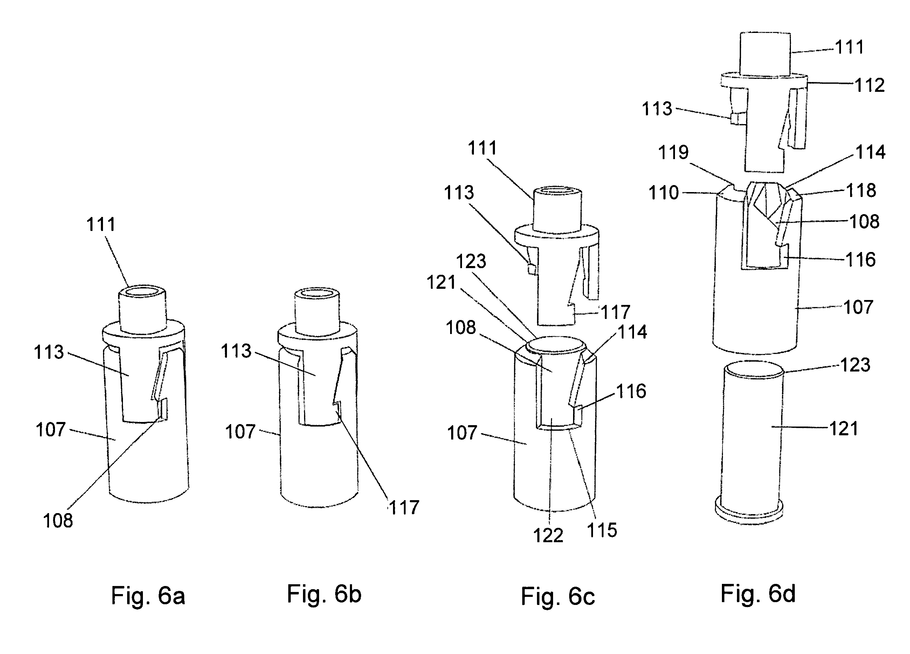

Figure 4 shows part of a bicycle frame comprising a saddle tube 101, in which a bicycle lock 103 is accommodated near the crank axle 102, which bicycle lock is provided with a locking pin 104 that can move forward and backward, one end 105 of which can be received in a recess formed in the crank axle 102, by means of which locking pin the crank axle 102 is locked against rotation and the bicycle is locked. In the illustrated embodiment, the housing 104 (see figure 5) is provided with external screw thread 105, by means of which the housing 104 can be screwed down in the saddle tube 101. It is also possible to use any other form of detachable connection. As figure 5 shows, the system comprises a housing tube part 107 provided at the upper side 106 of the housing 104, in whose wall recesses 108 (three in this embodiment) are formed, each recess having a different shape. The recesses 108 terminate in the upper edge 110 of the housing tube part 107 with an end 109. As is shown in figures 6a, 6b, 6c and 6d, the system further comprises a tool 111 to be placed in the saddle tube 101, which tool can be mounted to a rod, so that it can be inserted into the saddle tube. In the illustrated embodiment, the tool 111 comprises a tool tube part 112 whose wall thickness and diameter are substantially the same as those of the housing tube part 107. The tool tube part 112 is provided with three projections 113, which are formed of the material of the tool tube part 112. The spacing and shapes of the projections 113 correspond to the spacing and shapes of the recesses 108 in the housing tube part 107, such that each projection 113 fits only one of the recesses 108 in the housing tube part 107.

The shapes of the recesses 108 and the projections 113 are adapted to conform to each other and may be configured differently in a new series of bicycle locks. The tool 111 can be inserted into the recesses 108 with its projections 113 via the openings 114 in the upper edge 110. As figures 6a and 6b show, the width of a recess 108 is slightly larger than the width of the associated projections 113, so that there is some space to move for a projection 113 within a recess 108. A portion 115 of a recess 108 terminates in a corner 116, whilst the associated projection 113 is provided with a portion 117 that can hook into the corner 116. In use, the tool is inserted into the saddle tube and the projections 113 are moved into the recesses 108, which conform to the projections 113 in question as regards their shape and size, via the openings 114 in the upper edge 110, and subsequently rotated so as to screw down or unscrew the housing 104. If the housing 104 is to be lifted from the saddle tube 101, this can be done by causing the portions 117 to hook behind the corners 116, so that the housing can be lifted.

Another security measure against unauthorised removal is realised in that the upper edge 110 of the housing tube part 107 is inclined (118) and comprises a sharp edge 119. This achieves that the required contact area for obtaining sufficient adhesion between the housing tube part 107 and any kind of device, for example by means of a glue, for transmitting a rotary motion to the housing 104 is not provided. Furthermore, a resilient/elastic material may be provided between the housing 104 of the bicycle lock and the inner side of the saddle tube in the form of a ring 120 of foam provided round the housing 105 (figure 5), which further helps to secure the housing 104 in the saddle tube 101.

The housing tube part 107 further comprises an inner tube part 121 that is rotatably provided therein, the external diameter of which inner tube part 121 is only slightly smaller than the internal diameter of the housing tube part 107, such that the inner tube part 121 is a more or less tight fit in the housing tube part 107. The inner tube part 121 disposed within the housing tube part 107 renders it impossible to gain access to a recess 108 via a side 122, for example by means of another tool, a pair of tongs or any kind of hook. The inner tube part 121 is provided within the housing tube part 107 with a tight fit, so that it is not possible either to prize a tool between the inner tube part 121 and the housing tube part 107. The inner tube part 121 is furthermore rotatably provided in the housing tube part 107, so that, when a tool is clamped in the inner tube part 121 and rotated, said rotary motion will only be transmitted to the inner tube part 121 and cannot be transmitted to the housing tube part 107, so that the housing 104, which is fixedly connected to the housing tube part 107, cannot be unscrewed from the saddle tube 101 in this way. The upper edge 123 of the inner tube part 121 is located at substantially the same level as the upper edge 110 of the housing tube part 107 outside the area of the recesses.

The bicycle lock further comprises a remote control unit and a remotely controlled motor. The bicycle lock may further comprise means by which an alarm signal can be delivered, which means may be controlled by one or more detectors, which are capable of detecting that the bicycle is being moved or lifted and which can subsequently activate the alarm signal means (acoustic or optical signal means).

The invention is not limited to the use thereof in a bicycle, it may also be used in any other type of cycle or vehicle comprising a tubular frame.

## Claims

1. A bicycle lock for locking the rotation of the crank axle of a bicycle, comprising a housing for the lock, which can be accommodated in the saddle tube, near the crank axle, which lock is provided with a locking pin that can move forward and backward, one end of which can be received in a recess formed in the crank axle or in a part surrounding said crank axle in a locking position of the locking pin, in which locking position the crank axle is locked against rotation and the bicycle is locked, whilst the other end of the locking pin is connected, via a spring, to a drive unit for moving the locking pin into and out of the locking position, **characterised in that** a sleeve which is movable between two end positions is accommodated in the housing, which sleeve is connected to the drive unit at one end and which is provided with a passage at the other end, within which passage the locking pin can move forward and backward, whilst the spring is accommodated in the sleeve, being supported on the inside of the sleeve on the one hand and on the locking pin on the other hand.

2. A bicycle lock according to claim 1, **characterised in that** the connection of the sleeve to the drive unit is formed by an internally threaded opening formed in the sleeve, through which a screw shaft connected to the drive unit is passed.

3. A bicycle lock according to claim 1 or 2, **characterised in that** the drive unit is formed by an electric motor.

4. A bicycle lock according to claim 3, **characterised in that** the electric motor is deactivated on receipt of a signal from one or more switches operated by the sleeve when the sleeve reaches an end position in the housing.

5. A bicycle lock according to claim 4, **characterised in that** the switches are disposed on either side of the sleeve in the housing.

6. A bicycle lock according to claim 4 or 5, **characterised in that** said switches are pressure switches.

7. A bicycle fitted with a bicycle lock according to any one of the preceding claims.

8. A bicycle according to claim 7, **characterised in that** the pedals of the bicycle are mounted in such manner relative to the recess in the crank axle that the locking pin can only be moved into the locking position when the pedals of the bicycle take up an at least substantially vertical position.

9. A bicycle according to claim 7 or 8, **characterised in that** the crank axle, or a part surrounding said crank axle, is provided with only one recess.

10. A bicycle according to claim 7, 8 or 9, **characterised in that** the crank axle, or a part surrounding said crank axle, is provided with maximally two recesses.

11. A bicycle according to any one of claims 7-10, provided with a security system against unauthorized removal of the housing of the bicycle lock that is accommodated in the saddle tube of the bicycle, near the crank axle, which housing is provided with a connecting means adapted to mate with a connecting element mounted in the saddle tube or forming part thereof for forming a detachable connection, for example a rotary connection, such as a threaded connection, of the housing in the saddle tube, said system comprising a housing tube part provided at the upper side of the housing, in whose wall at least one further recess is provided, which recess terminates in the upper edge of the housing tube part with a first end thereof, said system further comprising a tool that can be placed in the saddle tube, which tool is provided with at least one projection, the shapes of said further recess and said projection being adapted to conform to one another, such that the tool provided with the projection can be inserted into said further recess and is capable of transmitting a movement to the housing tube part for fixing the connection of the housing in the saddle tube, or for releasing the connection and removing the housing from the saddle tube.

12. A bicycle according to claim 11, **characterised in that** the tool is provided with several projections, the spacing and shapes of which projections correspond to the spacing and shapes of the further recesses in the housing tube part, such that each projection fits only one of said further recesses in the housing tube part.

13. A bicycle according to claim 11 or 12, **characterised in that** a resilient material is provided between the outer side of the housing of the bicycle lock and the inner side of the saddle tube.

14. A security system intended for use in a bicycle according to claims 11, 12 or 13.
